# EUROPÄISCHE PATENTSCHRIFT

(11) **EP 1 497 638 B1**
(45) Veröffentlichungstag und Bekanntmachung des Hinweises auf die Patenterteilung: **10.09.2008**
(21) Anmeldenummer: 03714678.4
(22) Anmeldetag: 06.03.2003
(51) Int. Cl.: G01N 27/419, G01N 27/406, G01N 27/407

(54) **VERFAHREN ZUM BETREIBEN EINER BREITBAND-LAMBDASONDE**
METHOD FOR OPERATING A BROADBAND LAMBDA PROBE
PROCEDE POUR FAIRE FONCTIONNER UNE SONDE LAMBDA A LARGE BANDE

(30) Priorität: 16.04.2002 DE 10216724
(43) Veröffentlichungstag der Anmeldung: 19.01.2005
(73) Patentinhaber: ROBERT BOSCH GMBH, 70442 Stuttgart (DE)
(72) Erfinder: WIEDENMANN, Hans-Martin, 70195 Stuttgart (DE); DIEHL, Lothar, 70499 Stuttgart (DE); MOSER, Thomas, 71701 Schwieberdingen (DE)
(86) Internationale Anmeldenummer: PCT/DE2003/000701
(87) Internationale Veröffentlichungsnummer: WO 2003/087803

(56) Entgegenhaltungen:
- DE-A- 19 838 466
- DE-A1- 3 626 162
- DE-A1- 19 840 888
- US-A- 4 601 809
- US-A- 4 803 866

## Beschreibung

### Stand der Technik

Die Erfindung geht aus von einem Verfahren zum Betreiben einer Breitband-Lambdasonde für die Bestimmung der Sauerstoffkonzentration im Abgas einer mit einem Kraftstoff-Luft-Gemisch betriebenen Brennkraftmaschine nach dem Oberbegriff des Anspruchs 1.

Bei einem bekannten Verfahren dieser Art (DE 198 38 466 A1) wird zum Abbau eines Polarisationseffekts an der Lambdasonde, der eine Verfälschung des Meßwerts zur Folge hat, nach einer längeren Dauer des Magerbetriebs der Lamdasonde, in der ein kathodischer Pumpstrom fließt, durch ein Schaltmittel der Pumpstrom impulsartig umgekehrt, so daß die im Magerbetrieb normalerweise als Kathode betriebene Innenelektrode kurzzeitig anodisch belastet wird und die Bewegungsrichtung der gepumpten Sauerstoffionen sich umkehrt. Die Frequenz und die Dauer der Impulse, mit der der Pumpstrom kurzfristig umgepolt wird, ist abhängig von der Detektions- oder Nernstspannung zwischen Meß- oder Nernstelektrode und Referenzelektrode der Nernstzelle gewählt.

Zur Minderung des gleichen bei Langzeitmagerbetrieb den Meßwert der Lambdasonde verfälschenden Polarisationseffekts der Innenelektrode wurde bereits in der DE 101 16 930 vorgeschlagen, im Langzeitmagerbetrieb einen gepulsten Betrieb der Pumpzelle mit extremen Tastverhältnis durchzuführen, wobei der über die Pumpzelle von der äußeren zur inneren Pumpelektrode fließende anodische Pumpstrom in sehr kleinen Intervallen umgekehrt wird.

### Vorteile der Erfindung

Das erfindungsgemäße Verfahren zum Betreiben einer Breitband-Lambdasonde mit den Merkmalen des Anspruchs 1 hat den Vorteil, daß während des Magerbetriebs der Brennkraftmaschine, in dem aus Gründen des Schutzes oder der Erhaltung oder Verbesserung der Funktion von dem Abgas ausgesetzten Bauteilen, wie Oxidationskatalysator und Partikelfilter, eine Kraftstoffnacheinspritzung in den Brennraum der Brennkraftmaschine vorgenommen wird, die Lambdasonde durch die damit verbundene Kraftstoffanreicherung im Abgas nicht ihre Meßempfindlichkeit verändert. Eine solche Nacheinspritzung wird beispielsweise zur Regenerierung eines dem Katalysator nachgeschalteten Partikelfilters vorgenommen, wobei die unverbrannten Kohlenwasserstoffe im Abgas erst im Katalysator nach der Lambdasonde verbrannt, d.h. oxidiert, werden. Kraftstoffnacheinspritzungen werden auch z.B. beim Kaltstart in der Warmlaufphase der Brennkraftmaschine zum schnellen Aufheizen des Katalysators durchgeführt, um dessen volle Funktionsfähigkeit möglichst schnell zu erreichen. Der Verlust bzw. die Reduzierung der Meßempfindlichkeit der Lambdasonde bei einer Kraftstoffnacheinspritzung ist darin begründet, daß bei der Kraftstoffnacheinspritzung Fettgas die im Magerbetrieb arbeitende Sonde trifft und die kathodisch belastete Innenelektrode der Pumpzelle (kathodischer Pumpstrom) nicht genügend katalytisch aktiv ist, um die durch die Diffusionssperre in den Meßraum gelangenden Kohlenwasserstoffe zu oxidieren. Im Meßraum entsteht eine erhöhte Kohlenwasserstoffkonzentration. Dadurch sinkt der Kohlenwasserstoff-Konzentrationsgradient über der Diffusionsbarriere und mindert den Kohlewasserstoff-Einstrom.

Ein gleicher Effekt tritt in der Anlauf- oder Aufheizphase der Lambdasonde auf, die unter dem Begriff "fast light off" als die Zeit vom Einschalten der Stromzufuhr zur Lambdasonde bis zu deren vollen Funktionsfähigkeit definiert ist. In dieser Phase ist die Innenelektrode der Pumpzelle noch nicht genügend katalytisch aktiv, um die durch die Diffusionssperre in den Meßraum diffundierenden Kohlenwasserstoff zu oxidieren.

Die erfindungsgemäße wiederholte Umpolung der Pumpspannung sorgt nunmehr dafür, daß durch die wiederholte, kurzzeitige, anodische Belastung der Innenelektrode der Pumpzelle Sauerstoffionen in den Meßraum hineingepumpt werden und dort die Kohlenwasserstoffe oxidieren. Wird die Wiederholrate der Umpolung der Pumpspannung hoch genug gewählt, so ändert sich die Dynamik der Sonde nicht. Bei genügend hoher Elektrodentemperatur kann der Sauerstofftransport der Pumpfrequenz wirksam folgen und die Katalyse der HC-Umsetzung wird verbessert.

Durch die in den weiteren Ansprüchen aufgeführten Maßnahmen sind vorteilhafte Weiterbildungen und Verbesserungen des im Anspruch 1 angegebenen Verfahrens möglich.

Gemäß einer vorteilhaften Ausführungsform der Erfindung wird zur wiederholten Umpolung der Pumpspannung an die Pumpzelle eine Pulsfolge von Spannungspulsen mit konstanter Amplitude gelegt und durch Pulsweitenmodulation der Spannungspulse in Abhängigkeit von der Nernstspannung der Nernstzelle ein effektiver Pumpstrom eingestellt.

In einer alternativen Ausführungsform der Erfindung wird zur wiederholten Umpolung der Pumpspannung an die Pumpzelle eine Pulsfolge von Spannungspulsen mit konstanter Pulsbreite gelegt und durch Änderung der Amplitude der Spannungspulse in Abhängigkeit von der Nernstspannung der Nernstzelle ein effektiver Pumpstrom eingestellt.

Gemäß einer vorteilhaften Ausführungsform der Erfindung wird die Frequenz der Pulsfolge mit 10 - 2000 Hz, vorzugsweise 500 Hz gewählt. Wird die Frequenz der Pulsfolge gleich der Abrufrate des Lambda-Signals von der Lambdasonde zum Zwecke der Einstellung des Kraftstoff-Luft-Gemischs der Brennkraftmaschine gewählt, so können mit diesem Verfahren auch Sonden mit einer niedrigen Betriebstemperatur von beispielsweise 500°C betrieben werden.

Gemäß einer vorteilhaften Ausführungsform der Erfindung wird der Pulsbetrieb der Pumpzelle zur Aufrechterhaltung der katalytischen Eigenschaft der Innenelektrode durchgehend auch im Mager- und Fettbetrieb der Brennkraftmaschine beibehalten. Dadurch ergibt sich eine hard- und softwaremäßige Vereinfachung bei der Konzeption eines Steuergeräts zum Ansteuern der Breitband-Lambdasonde. Zusätzlich werden noch bekannte Vorteile erzielt, wie die Beseitigung der eingangs beschriebenen, sich der Nernstspannung überlagernden Polarisationsspannung, die zu der sog. Fettdrift der Sonde führt.

### Zeichnung

Die Erfindung ist anhand eines in der Zeichnung dargestellten Ausführungsbeispiels im folgenden näher beschrieben. Es zeigen in schematischer Darstellung:
- Fig. 1: ein Querschnitt einer Breitband-Lambdasonde in Verbindung mit einem Blockschaltbild zu ihrer Ansteuerung,
- Fig. 2: jeweils ein Diagramm der an der Pumpzelle
- bis 5: anliegenden Pumpspannung für die maximal möglichen Spannungsamplituden.

### Beschreibung des Ausführungsbeispiels

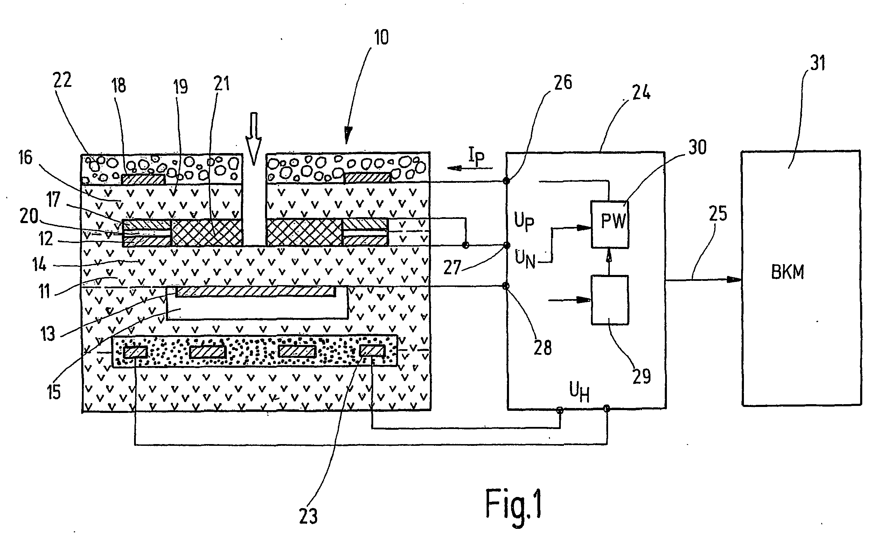

Die in Fig. 1 im Querschnitt schematisch skizzierte Breitband-Lambdasonde 10 dient zur Bestimmung einer Sauerstoffkonzentration in Abgasen von Brennkraftmaschinen, um ein Steuersignal zur Einstellung eines Kraftstoff-Luft-Gemischs zu erhalten, mit dem die Brennkraftmaschine betrieben wird. Die Lambdasonde 10 besitzt eine Meß- oder Nernstzelle 11 mit einer Meßelektrode 12 und einer Referenzelektrode 13, die auf einem Festelektrolyten 14 angeordnet sind, sowie eine Pumpzelle 16 mit einer Außenelektrode 18, auch äußere Pumpelektrode, kurz APE, genannt, und einer Innenelektrode 17, auch innere Pumpelektrode, kurz - da sie mit der Nernstelektrode auf gleichem Potential liegt - IPN genannt, die ebenfalls auf einem Festelektrolyten 19 angeordnet sind. Als Festelektrolyten 18, 19 wird ein mit Yttriumoxid stabilisiertes Zirkoniumoxid verwendet. Die Referenzelektrode 13 ist in einem Referenzkanal 15 angeordnet, der von einem Referenzgas, üblicherweise Luft, beaufschlagt ist. Die Innenelektrode 17 der Pumpzelle 16 ist zusammen mit der Meßelektrode 12 der Nernstzelle 11, auch Nernstelektrode genannt, in einem Meßraum 20 angeordnet, der über eine Diffusionsbarriere 21 mit dem Abgas der Brennkraftmaschine in Verbindung steht. Die Außenelektrode 18 ist mit einer porösen Schutzschicht 22 überdeckt und direkt dem Abgas ausgesetzt. Zur Lambdasonde 10 gehört ferner eine Heizeinrichtung 23, die von einem sog. Heizmäander gebildet ist. Die Heizeinrichtung 23 ist mit einer Heizspannung U_{H} beaufschlagt und wird auf einer konstanten Betriebstemperatur von z.B. 780° gehalten.

Zum Betrieb der Lambdasonde 10 ist diese mit einem Steuergerät 24 verbunden, das seinerseits Steuersignale zur Einstellung des Kraftstoff-Luft-Gemischs in der Brennkraftmaschine generiert. In Fig. 1 ist die Brennkraftmaschine als Block 31 dargestellt, deren Ansteuerung durch das Steuergerät 24 durch die Signalleitung 25 symbolisiert ist. Mit dem Steuergerät 24 ist die Pumpzelle 16 über die Klemmen 26 und 27 verbunden, wobei die Außenelektrode 18 an der Klemme 26 und die Innenelektrode 17 an der Klemme 27 angeschlossen ist. Die Nernstzelle 11 ist über die Klemmen 27, 28 mit dem Steuergerät 24 verbunden, wobei die Meßelektrode 12 an der Klemme 27 und die Referenzelektrode 13 an der Klemme 28 angeschlossen ist. Zwischen den Klemmen 27 und 28 ist die Detektions- oder Nernstspannung U_{N} abnehmbar, und an den Klemmen 26, 27 steht die Pumpspannung U_{P} an. Das Steuergerät 24 besitzt eine hier nicht dargestellte Regelschaltung, mit der die Pumpspannung U_{P} in Abhängigkeit von der Nernstspannung U_{N} eingestellt wird. Letztere ist wiederum abhängig von dem Sauerstoffverhältnis, dem die Meßelektrode 12 und die Referenzelektrode 13 ausgesetzt sind. Das Steuergerät 24 besitzt weiterhin einen Spannungsimpulsgenerator 29 und einen Pulsweitenmodulator 30 zur Steuerung der Pulsbreite der Spannungsimpulse oder Spannungspulse.

Mit dem vorstehend beschriebenen Steuergerät 24 wird die Lambdasonde 10 nach folgendem Verfahren betrieben:

Aufgrund des vorhandenen Sauerstoffkonzentrationsunterschieds zwischen Meßelektrode 12 und Referenzelektrode 13 stellt sich eine bestimmte Nernstspannung U_{N} ein, die ein Maß für die Sauerstoffkonzentration im Meßraum 20 ist. Abhängig von der Nernstspannung U_{N} wird eine an der Pumpzelle 16 liegende Pumpspannung U_{P} eingestellt, die einen Pumpstrom I_{P} über die Pumpzelle 16 treibt. Je nach Sauerstoffgehalt des Abgases ist dieser Pumpstrom I_{P} kathodisch (wie in Fig. 1 eingezeichnet) oder anodisch, d.h. im ersten Fall ist die Außenelektrode 18 als Anode und die Innenelektrode 17 als Kathode und im zweiten Fall umgekehrt die Außenelektrode 18 als Kathode und die Innenelektrode 17 als Anode betrieben. Bei stabilem Betrieb der Brennkraftmaschine 31 mit einem im Magerbereich liegenden Kraftstoff-Luft-Gemisch ist der Pumpstrom I_{P} kathodisch, d.h. die Innenelektrode 17 der Pumpzelle 16 ist kathodisch belastet. Bei stabilem Betrieb der Brennkraftmaschine 31 mit einem im Fettbereich liegenden Kraftstoff-Luft-Gemisch ist der Pumpstrom I_{P} anodisch, d.h. die Innenelektrode 17 der Pumpzelle 16 ist anodisch belastet. Im ersten Fall werden Sauerstoffionen aus dem Meßraum 20 abgepumpt und im zweiten Fall werden Sauerstoffionen aus dem Abgas in den Meßraum 20 hineingepumpt. Die Pumpspannung U_{P} wird dabei so eingeregelt, daß im Meßraum 20 sich eine konstante Sauerstoffkonzentration einstellt, die eine konstante Nernstspannung von z.B. 450 mV zur Folge hat. Der sich einstellende Pumpstrom I_{P} ist ein Maß für die Sauerstoffkonzentration im Abgas und wird als Meßspannung erfaßt. Aus einer Kennlinie wird der zugehörige λ-wert bestimmt.

Im Magerbetrieb der Brennkraftmaschine 31, d.h. bei Betrieb der Brennkraftmaschine 31 mit einem Kraftstoff-Luft-Gemisch im Magerbereich, werden für bestimmte Betriebsfälle, z.B. für die Regenerierung eines einem Katalysator nachgeordneten Partikelfilters, vom Steuergerät 28 Kraftstoffnacheinspritzungen ausgelöst, um durch einen Verbrennungsprozeß eine höhere Temperatur, z.B. am Partikelfilter zur Partikelbeseitigung, zu erreichen. Bei dieser Nacheinspritzung gelangen unverbrannte Kohlenwasserstoffe in das Abgas, die im Oxidationskatalysator verbrannt werden und damit den Partikelfilter aufheizen. Da die Lambdasonde 10 vor dem Oxidationskatalysator angeordnet ist, gelangen die unverbrannten Kohlenwasserstoffe auf die Lambdasonde 10. Die im Magerbetrieb kathodisch belastete Innenelektrode 17 der Pumpzelle 16 ist nicht genügend katalytisch, um die durch die Diffusionsbarriere 21 in den Meßraum 20 gelangenden Kohlenwasserstoffe zu oxidieren. Wie bereits eingangs beschrieben, sinkt dadurch die Empfindlichkeit der Lambdasonde 10 in undefinierter Weise. Zur Regelung der Lambdasonde 10 während der Nacheinspritzung ist es aber erforderlich, die mageren und fetten Abgasbestandteile vollständig zu erfassen. Hierzu wird während der Dauer einer Kraftstoffnacheinspritzung im Magerbetrieb eine kurzzeitige Umpolung der Pumpspannung U_{P} wiederholt vorgenommen, so daß die Innenelektrode 17 wiederholt anodisch belastet wird und sich kurzfristig ein gegensinniger Pumpstrom I_{P} einstellt. Dadurch werden Sauerstoffionen in den Meßraum 20 hineingepumpt werden, wo sie die Kohlenwasserstoffe oxidieren. Durch diese Kohlenwasserstoff-Umsetzung ist nunmehr wiederum der Sauerstoffabtransport aus dem Meßraum 20 bei kathodischem Pumpstrom I_{P} möglich. Wird die Frequenz der Umpolung genügend hoch gewählt, ändert sich die Dynamik der Lambdasonde 10 nicht. Bei genügend hoher Temperatur der Lambdasonde 10 kann der Sauerstofftransport der Pumpfrequenz wirksam folgen und die Katalyse der Kohlenwasserstoff-Umsetzung wird verbessert.

Die wiederholte Umpolung der Pumpspannung U_{P} an der Pumpzelle 16 wird dadurch erreicht, daß an die Pumpzelle 16 eine Pulsfolge von Spannungspulsen mit konstanter Amplitude gelegt wird, die im Spannungsimpulsgenerator 29 erzeugt werden, wobei mittels des Pulsweitenmodulators 30 die Breite bzw. Weite der Spannungspulse in Abhängigkeit von der Nernstspannung U_{N} so variiert wird, daß sich ein effektiver Pumpstrom I_{P} einstellt. Der Effektivwert des Pumpstroms I_{P} ist gleich dem Pumpstrom I_{P} bei bekanntem Gleichstrombetrieb der Lambdasonde 10 im Magerbetrieb und Fettbetrieb der Brennkraftmaschine 31.

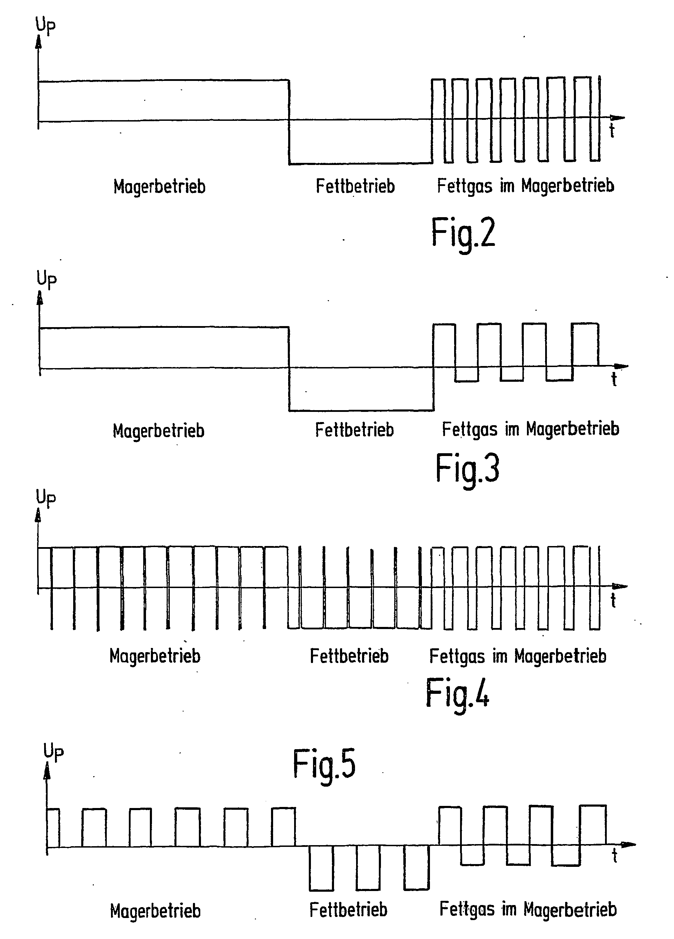

In Fig. 2 ist die Pumpspannung U_{P} an der Pumpzelle 16 in Abhängigkeit von der Zeit t für den Magerbetrieb, für den Fettbetrieb und für den Magerbetrieb mit Fettgas durch Kraftstoffnacheinspritzung schematisiert dargestellt. Dabei ist lediglich die maximale Pumpspannung an der Außenelektrode 18 gegenüber der Innenelektrode 17 der Pumpzelle 16 dargestellt. Wie zu sehen ist, ist im Magerbetrieb die Außenelektrode 18 anodisch belastet, so daß ein kathodischer Pumpstrom fließt, durch den Sauerstoffionen aus dem Meßraum 20 herausgepumpt werden. Ändert sich die Gemischzusammensetzung der Brennkraftmaschine und wird im Abgas ein Sauerstoffmangel detektiert, so wird die Pumpspannung U_{P} umgepolt und nunmehr die Innenelektrode 17 anodisch belastet. Dadurch werden die Sauerstoffionen aus dem Abgas in den Meßraum 20 hineingepumpt, so daß die Sauerstoffkonzentration im Meßraum 20 auch in dem durch die Nacheinspritzung verursachten kurzzeitigen Fettbetrieb konstant gehalten wird. Im letzten Teil der Fig. 2 ist die Pumpspannung U_{P} im Magerbetrieb bei
Kraftstoffnacheinspritzung dargestellt. Durch die periodische Umschaltung der Pumpspannung U_{P} wird der an sich kathodische Pumpstrom I_{P} kurzzeitig in einen anodischen Pumpstrom I_{P} umgekehrt, wobei der Effektivwert dieses anodischen Pumpstroms I_{P} durch die Breite der negativen Spannungsimpulse festgelegt ist.

In Abwandlung des beschriebenen Betriebsverfahrens der Lambdasonde 10 kann die wiederholte Umpolung der Pumpspannung U_{P} während der Dauer einer Kraftstoffnacheinspritzung auch mit einer Pulsfolge von Spannungspulsen realisiert werden, die eine konstante Pulsbreite aufweisen. In diesem Fall wird der effektive Pumpstrom Ip durch Änderung der Amplituden der Spannungspulse in Abhängigkeit von der Nernstspannung U_{N} der Nernstzelle 16 eingestellt, wie dies in Fig. 3 im Bereich "Fettgas im Magerbetrieb" bei Nacheinspritzung dargestellt ist.

Die Frequenz der Pulsfolge wird in beiden Fällen der Fig. 2 und 3 zwischen 10 und 2000 Hz gewählt. Als günstig hat sich dabei eine Frequenz von 500 Hz herausgestellt. Als vorteilhaft hat sich erwiesen, über die Heizeinrichtung 23 in den Zeiten, in denen das Steuergerät 24 die Nacheinspritzung aktiviert, die Betriebstemperatur der Lambdasonde 10 zu erhöhen, z.B. von 780°C auf 880°C.

Alternativ kann die Pulsfolge der Spannungspulse mit dem Takt synchronisiert werden, mit dem das Lambdasignal, also der sich einstellende, effektive Pumpstrom I_{P}, zur Steuerung der Einstellung des Kraftstoff-Luft-Gemischs abgerufen wird. In diesem Fall kann das beschriebene Verfahren auch für Lambdasonden 10 mit niedrigerer Betriebstemperatur von beispielsweise 500°C eingesetzt werden.

Die beschriebene wiederholte Umpolung der Pumpzelle 16 wird über die Phasen der Nacheinspritzung hinaus auch in der Anlauf- oder Aufheizphase der Lambdasonde 10 in der beschriebenen Weise durchgeführt, da auch hier die Empfindlichkeit der Lambdasonde 10 durch die geringe katalytische Wirkung der Innenelektrode 17 der Pumpzelle 16 gestört ist. Die Anlauf- oder Aufheizphase der Lambdasonde 10 ist durch die sog. "fast light off", d.h. die Zeit vom Beginn der Bestromung der Lambdasonde 10 bis zu deren vollen Funktionsfähigkeit, festgelegt.

Zur Vereinfachung der elektronischen Schaltung kann der Pulsbetrieb der Lambdasonde 10 während der Nacheinspritzung und/oder der "fast light off" auch ausgedehnt werden auf den gesamten Betrieb der Lambdasonde 10 im Mager- und Fettbereich, wie dies in den Spannungsdiagrammen der Fig. 4 und 5 dargestellt ist. In gleicher Weise wie zu Fig. 2 und 3 beschrieben ist, kann der effektive Pumpstrom I_{P} entweder durch Pulsweitenmodulation der Spannungspulse mit konstanter Amplitude (Fig. 4) oder durch Amplitudenvariation der Spannungsimpulse bei konstanter Pulsbreite (Fig. 5) sowohl im Magerbetrieb als auch Fettbetrieb und - wie bereits beschrieben - bei Fettgas im Magerbereich durch Kraftstoffnacheinspritzung eingestellt werden.

Die Erfindung ist nicht auf den dargestellten und beschriebenen Aufbau der Breitband-Lambdasonde beschränkt. Das gleiche Verfahren kann auch zum Betreiben einer modifizierten flachbauenden Breitband-Lambdasonde eingesetzt werden, wie sie in DE 199 41 051 A1 beschrieben ist.

## Patentansprüche

1. Verfahren zum Betreiben einer Breitband-Lambdasonde (10) mit Magerbetriebsphasen für die Bestimmung der Sauerstoffkonzentration im Abgas einer mit einem Kraftstoff-Luft-Gemisch betriebenen Brennkraftmaschine, die eine Nernstzelle (11) mit einer Messelektrode (12) und einer in einem Referenzkanal (15) einem Referenzgas ausgesetzten Referenzelektrode (13) und eine Pumpzelle (16) mit einer dem Abgas ausgesetzten Außenelektrode (18) und einer zusammen mit der Messelektrode (12) in einem vom Abgas durch eine Diffusionsbarriere (21) getrennten Meßraum (20) angeordneten Innenelektrode (17) aufweist, bei dem an die Pumpzelle (16) eine Pumpspannung (U_{P}) angelegt wird, die abhängig von einer der Sauerstoffkonzentration im Messraum (20) entsprechenden, an der Nernstzelle (16) abgenommenen Nernstspannung (U_{N}) eingestellt wird und je nach Sauerstoffgehalt des Abgases einen kathodischen oder anodischen Pumpstrom (I_{P}) über die Pumpzelle (16) treibt, der bei stabilem Betrieb der Brennkraftmaschine mit einem im Magerbereich liegenden Kraftstoff-Luft-Gemisch (Magerbetrieb) kathodisch und bei stabilem Betrieb der Brennkraftmaschine mit einem im Fettbereich liegenden Kraftstoff-Luft-Gemisch (Fettbetrieb) anodisch ist, und bei dem während des Magerbetriebs wiederholt kurzzeitig die Pumpspannung (U_{P}) umgepolt wird, so dass sich kurzfristig ein gegensinniger Pumpstrom (I_{P}) einstellt, **dadurch gekennzeichnet, dass** eine wiederholte kurzzeitige Umpolung der Pumpspannung (U_{P}) während der Dauer von im Magerbetrieb der Brennkraftmaschine (31) erfolgenden Kraftstoffnacheinspritzungen und/oder während der Aufheizphase der Lambdasonde (10) vorgenommen wird.

2. Verfahren nach Anspruch 1, **dadurch gekennzeichnet, dass** zur wiederholten Umpolung der Pumpspannung (U_{P}) an die Pumpzelle (16) eine Pulsfolge von Spannungspulsen mit konstanter Amplitude gelegt wird und durch Pulsweitenmodulation der Spannungspulse in Abhängigkeit von der Nernstspannung (U_{N}) der Nernstzelle (11) ein effektiver Pumpstrom (I_{P}) eingestellt wird.

3. Verfahren nach Anspruch 1, **dadurch gekennzeichnet, dass** zur wiederholten Umpolung der Pumpspannung (U_{P}) an die Pumpzelle (16) eine Pulsfolge von Spannungspulsen mit konstanter Pulsbreite gelegt wird und durch Änderung der Amplituden der Spannungspulse in Abhängigkeit von der Nernstspannung (U_{N}) der Nernstzelle (11) ein effektiver Pumpstrom (I_{P}) eingestellt wird.

4. Verfahren nach Anspruch 2 oder 3, **dadurch gekennzeichnet, dass** die Frequenz der Pulsfolge mit 10 - 2000 Hz, vorzugsweise 500 Hz, gewählt wird.

5. Verfahren nach einem der Ansprüche 1 - 4, **dadurch gekennzeichnet, dass** die Frequenz der Pulsfolge gleich der Abrufrate des Lambdasignals für die Einstellung des Kraftstoff-Luft-Gemischs der Brennkraftmaschine (31) gewählt wird.

6. Verfahren nach einem der Ansprüche 1 - 5, **dadurch gekennzeichnet, dass** für die Dauer der Nacheinspritzung und/oder der Aufheizphase der Lambdasonde (10) die Betriebstemperatur der Lambdasonde (10) erhöht wird.

7. Verfahren nach einem der Ansprüche 2 - 6, **dadurch gekennzeichnet, dass** der Pulsbetrieb der Pumpzelle (16) durchgehend im Mager- und Fettbetrieb der Brennkraftmaschine (31) beibehalten wird.

## Claims

1. Method for operating a broadband lambda probe (10) with lean-mix operating phases for determining the oxygen concentration in the exhaust gas of an internal combustion engine operated with a fuel/air mixture, the said lambda probe having a Nernst cell (11) with a measuring electrode (12) and a reference electrode (13) exposed to a reference gas in a reference duct (15) and a pumping cell (16) with an external electrode (18) exposed to the exhaust gas and with an internal electrode (17) arranged together with the measuring electrode (12) in a measuring space (20) separated from the exhaust gas by a diffusion barrier (21), in which method a pump voltage (U_{P}) is applied to the pumping cell (16) and is set as a function of a Nernst voltage (U_{N}) corresponding to the oxygen concentration in the measuring space (20) and picked up at the Nernst cell (16) and, depending on the oxygen content of the exhaust gas, drives via the pumping cell (16) a cathodic or anodic pumping current (I_{P}) which is cathodic during stable operation of the internal combustion engine with a fuel/air mixture lying in the lean range (lean-mix operation) and is anodic during stable operation of the internal combustion engine with a fuel/air mixture lying in the rich range (rich-mix operation), and in which method, during lean-mix operation, the polarity of the pumping voltage (U_{P}) is briefly reversed repeatedly, so that an opposite pumping current (I_{P}) is briefly set, **characterized in that** a repeated brief reversal in polarity of the pumping voltage (U_{P}) is carried out for the duration of secondary fuel injections taking place in the lean-mix operation of the internal combustion engine (31) and/or is carried out during the heating phase of the lambda probe (10).

2. Method according to Claim 1, **characterized in that,** for the repeated reversal in polarity of the pumping voltage (U_{P}), a pulse train of voltage pulses of constant amplitude is applied to the pumping cell (16) and an effective pumping current (I_{P}) is set by the pulse-width modulation of the voltage pulses as a function of the Nernst voltage (U_{N}) of the Nernst cell (11).

3. Method according to Claim 1, **characterized in that**, for the repeated reversal in polarity of the pumping voltage (U_{P}), a pulse train of voltage pulses of constant pulse width is applied to the pumping cell (16) and an effective pumping current (I_{P}) is set by a change in the amplitudes of the voltage pulses as a function of the Nernst voltage (U_{N}) of the Nernst cell (11).

4. Method according to Claim 2 or 3, **characterized in that** the selected frequency of the pulse train is 10-2000 Hz, preferably 500 Hz.

5. Method according to one of Claims 1-4, **characterized in that** the selected frequency of the pulse train is equal to the interrogation rate of the lambda signal for setting the fuel/air mixture of the internal combustion engine (31).

6. Method according to one of Claims 1-5, **characterized in that** the operating temperature of the lambda probe (10) is increased for the duration of secondary injection and/or of the heating phase of the lambda probe (10).

7. Method according to one of Claims 2-6, **characterized in that** the pulsed operation of the pumping cell (16) is maintained continuously in the lean-mix and rich-mix operation of the internal combustion engine (31).

## Revendications

1. Procédé de gestion d'une sonde Lambda à bande large (10) avec des phases de fonctionnement en régime maigre pour déterminer la concentration en oxygène des gaz d'échappement d'un moteur à combustion interne fonctionnant avec un mélange carburant-air,
cette sonde comportant une cellule de Nernst (11), avec une électrode de mesure (12) et une électrode de référence (13) exposées à un gaz de référence dans un canal de référence (15) ainsi qu'une cellule de pompage (16) munie d'une électrode extérieure (18) exposée aux gaz d'échappement ainsi qu'une électrode intérieure (17) installée avec l'électrode de mesure (12) dans une chambre de mesure (20) séparée des gaz d'échappement par une barrière de diffusion (21),
procédé selon lequel
on applique une tension de pompage (U_{P}) à la cellule de pompage (16), cette tension étant réglée en fonction de la tension de Nernst (U_{N}) correspondant à la concentration en oxygène dans la chambre de mesure (20) et prise sur la cellule de Nernst (16), et selon la teneur en oxygène dans les gaz d'échappement, un courant de pompage cathodique ou anodique (I_{P}) entraîne la cellule de pompage (16), courant qui pour un fonctionnement stable du moteur à combustion interne avec un mélange carburant-air (mode maigre) situé dans le domaine de fonctionnement maigre, est cathodique et pour un fonctionnement stable du moteur à combustion interne avec un mélange carburant-air (mode riche) situé dans le mode de fonctionnement riche, est anodique et selon lequel au cours du mode de fonctionnement maigre, on inverse brièvement la polarité de la tension de pompage (U_{P}) de façon qu'il s'établisse brièvement un courant de pompage (I_{P}) de sens opposé,
**caractérisé en ce qu'**
on effectue une inversion de polarité brève, répétée de la tension de pompage (U_{P}) au cours de la durée des injections de carburant faites dans le moteur à combustion interne (31) travaillant en mode maigre et/ou au cours de la phase de chauffage de la sonde Lambda (10).

2. Procédé selon la revendication 1,
**caractérisé en ce que**
pour l'inversion de polarisation répétée de la tension de pompage (U_{P}), on applique à la cellule de pompage (16) une succession d'impulsions de tension d'amplitude constante et par modulation de largeur d'impulsion des impulsions de tension en fonction de la tension de Nernst (U_{N}) de la cellule de Nernst (11), on règle un courant de pompage effectif (I_{P}).

3. Procédé selon la revendication 1,
**caractérisé en ce que**
pour l'inversion de polarisation répétée de la tension de pompage (U_{P}) sur la cellule de pompage (16), on applique une succession d'impulsions de tension de largeur d'impulsion constante et en modifiant les amplitudes des impulsions de tension en fonction de la tension de Nernst (U_{N}) de la cellule de Nernst (11), on règle un courant de pompage effectif (I_{P}).

4. Procédé selon la revendication 2 ou 3,
**caractérisé en ce qu'**
on sélectionne la fréquence de la suite d'impulsion à 10-2000 Hz de préférence 500 Hz.

5. Procédé selon les revendications 1 à 4,
**caractérisé en ce qu'**
on sélectionne la fréquence de la suite d'impulsion égale au taux d'appel du signal de la sonde Lambda pour le réglage du mélange carburant-air du moteur à combustion interne (31).

6. Procédé selon les revendications 1 à 5,
**caractérisé en ce qu'**
on augmente la température de fonctionnement de la sonde Lambda (10) pour la durée de la postinjection et/ou la phase de chauffage de la sonde Lambda (10).

7. Procédé selon les revendications 2 à 6,
**caractérisé en ce qu'**
on conserve le mode de fonctionnement impulsionnel de la cellule de pompage (16) en continu en mode de fonctionnement maigre et en mode de fonctionnement riche du moteur à combustion interne (31).
